# EUROPEAN PATENT SPECIFICATION

(11) **EP 4 455 963 B1**
(45) Date of publication and mention of the grant of the patent: **27.05.2026**
(21) Application number: 24172708.0
(22) Date of filing: 26.04.2024
(51) Int. Cl.: G06Q 10/083, G06Q 10/0831, G06Q 10/08, G06Q 50/10, H04L 9/40

(54) **SYSTEM AND METHOD FOR SECURE SHARING OF INFORMATION REGARDING THE TRANSPORTATION OF GOODS**
SYSTEM UND VERFAHREN ZUM SICHEREN AUSTAUSCH VON INFORMATIONEN ÜBER DEN TRANSPORT VON WAREN
SYSTÈME ET METHODE POUR LE PARTAGE SÉCURISÉ D'INFORMATIONS CONCERNANT LE TRANSPORT DE MARCHANDISES

(30) Priority: 28.04.2023 IT 202300008481
(43) Date of publication of application: 30.10.2024
(73) Proprietor: Accudire S.r.l., 37135 Verona (VR) (IT)
(72) Inventor: Vincenzi, Abramo, 37135 Verona (VR) (IT); Ormesani, Andrea, 37135 Verona (VR) (IT)
(74) Representative: IP Sextant s.r.l.

(56) References cited:
- WO-A1-2021/216452
- US-A1- 2021 365 570

## Description

The present invention relates to a system and method for secure sharing of information regarding road transportation or RO-RO (roll-on/roll-off) of goods, the goods being shipped by one or more senders to at least one consignee, through the same type of transport means. More particularly, the present invention is advantageously applicable in the field of international transportation of goods by road, according to the "groupage" mode.

It is known that the international transportation of goods according to the "groupage" mode requires that the goods to be transported, being owned by different senders, are collected through at least one first logistic operator, at each sender premises, and transported to a departure logistic hub, where they are taken over and transported, for example through a second logistic operator and with the same type of transport means, for example a truck, to a destination logistic hub. Once arrived at the destination logistic hub, depending on who is the final consignee of the transported goods, those goods are to be considered arrived at their destination or they need to be brough, for example through at least one third logistic operator, to the respective final consignees. The collection of the goods at the different senders' premises and their transportation to their final destination is usually organized by a shipping agent that enters into a shipment contract with the senders and instructs the different logistic operators for the actual pickup of the goods and their transport to their final destination. the shipping agent, in fact, organizes the transportation of the goods usually on behalf of the company producing the goods themselves or the buyer, depending on the type of yield used.

The "groupage" transportation mode was essentially born as a response to the need of a company producing and exporting goods, to ship small batches of goods, which normally would not be sufficient to fill an entire transport vehicle or a large part of it and, in practice, is achieved by purchasing truck spaces, which are thus filled with goods from multiple companies, allowing for optimized transport management and reduced goods transfer costs.,.

From an administrative and logistical point of view, the transport of goods requires that they be accompanied by (paper or digital) documentation necessary for their identification and tracking throughout their journey from departure to final destination, and when several parties are involved in the transport, such as in the case of intra-Community transfers or exports, it is not always easy to comply with all the required formalities, especially in the case of selling the goods with Ex Works (ex-works) returns.

In fact, the senders, the logistics operator or logistics operators and the consignee involved in the shipment must arrange the documentation accompanying the goods, including the so-called waybill or CMR, which must be filled out and countersigned in compliance with current regulations, during the various stages of the transportation of the goods, by the physical persons involved in the actual transfer of such goods, starting with the sender and ending with the final consignee, and if a party involved in the transportation of the goods is not a physical person (it is, for example, a company), the physical person in charge of countersigning the accompanying documentation of the goods will be a person authorized and previously identified by that party. Alternatively, the waybill may be filled out by a shipping agent who, depending on the shipping contract with the sender, may act in the name and on behalf of the sender. In any case, such filled out administrative documentation must be signed by the physical persons involved in the transportation of the goods to the final consignee and must then be returned (to each sender and/or the shipping agent, as appropriate) and maintained for administrative and tax purposes as well as for interaction with any insurance companies, in case of damage sustained by the goods during transport.

To date, the management of communication flows between the parties involved in the transportation of goods and administrative and logistical documentation is mostly done by paper and is based on a traditional approach of information exchange (emails, phone calls, amendments, corrections, duplication of documents in pdf, etc.), which implies a number of operational inefficiencies and significant additional costs, of materials and dedicated personnel. In addition, this type of management does not allow companies producing goods exporting to foreign countries to easily arrange the documentation required by the local competent authorities, especially the Income Revenue Authority and the Customs and Monopolies Agency, to demonstrate compliance with regulations regarding the transportation of goods in international markets and tax aspects, with the result that exporting companies may incur administrative and financial penalties.

Not only that, the proper management of communication flows and administrative and logistical documentation to date is also complicated by the need to keep confidential the data of individual senders, whose goods are transported on the same means of transport according to the groupage mode described above, which cannot be shared with other senders of the shipment, due to issues of commercial confidentiality. Finally, the current management of communication flows and administrative and logistical documentation does not allow a sender to track the transportation of goods in a completely secure manner, does not provide guarantees that delivery has taken place, and does not guarantee that the information exchanged and thus the documentation that may result from it has not been altered or forged.

US 2021/0365570 A1 teaches a system and method of communication for freight organizations that always involves as the main transfer between a departure hub and a destination hub a shipment by sea, wherein a party involved in the freight (e.g., a shipping agent, a logistics operator, etc.) may generate a freight document that is encrypted and sent, along with the encryption keys for the data it contains and the digital signature of the party that generated the freight document, to a shipping document control hub. The system taught in US 2021/0365570 A1 also teaches the sending to the shipping document control hub, by the party that generated the shipping document, of a role list also, the role list containing the list of other parties involved in the freight transportation. This list of roles can also contain the digital signature of the sender of that list, thus allowing the list of roles to be associated with the person who sent it. It should be noted that the digital signature sent to the shipping document control hub is generated by the system on the basis of private keys generated by the party once it has authenticated itself in the system: it therefore identifies the party involved in the shipment and does not uniquely identify a physical person authorized by the party to operate in the system. Going back to the system taught in US 2021/0365570 A1, the encrypted document, the encryption keys for the data therein contained, and the digital signature of the party that generated the document are stored on multiple nodes of a blockchain, which other parties involved in the shipment can access based on held permissions, established by an access control policy and encoded in the role list. Each other party involved in the shipment can then access one or more of the data contained in the received encrypted transport document, based on the permissions they hold. In US2021/0365570 A1 only part or all of the data contained in the encrypted transport document is accessible to the parties involved in the transport, the digital signatures being used in the system to instead verify the integrity of the encrypted data in the encrypted transport document. Such a system, while providing centralized management of a transport document, is still complex and does not solve the drawbacks outlined above.

There is, therefore, a need to solve the aforementioned drawbacks, and the main object of the present invention is to simplify and make the sharing of information regarding the transportation of goods by road, among all parties involved in the shipment, less time-consuming and less costly.

Another object of the present invention is to ensure the secure tracking of goods during their transportation and their proper delivery.

Yet another object of the present invention is to simplify the sharing of information among the parties involved in the road transportation of goods, while complying with existing regulations on commercial confidentiality, particularly with the 1956 Geneva Convention (CMR) and the 2008 UNECE Additional Protocol on Electronic Consignment Note (e-CMR).

It is a specific object of the present invention a system for secure sharing of information regarding road transport or Roll-on/Roll-off transport, organized by a shipping agent, of goods sent by one or more senders to at least one consignee, through the same type of transport means and through the use of at least one first logistic operator and at least one second logistic operator, said system comprising:
- at least one non-editable digital repository;
- at least one data processing central unit, operatively connected to said at least one non-editable digital repository;
- a sender's device, for each sender, each sender's device being configured to be operatively connected to said at least one data processing central unit, to transmit thereto:
   ✔ data comprising logistic information on the shipment of that sender;
   ✔ one identification code of that sender's shipment;
   ✔ one identification code of the shipping agent's shipment; and
   ✔ a digital signature univocally associated to the sender's identity, if the sender is a physical person, or univocally associated to the identity of a physical person authorized by the sender to operate on the sender's device;
- at least one shipping agent's device, configured to be operatively connected to said at least one data processing central unit, to transmit thereto:
   ✔ data comprising at least one part of the logistic information on the shipping agent's shipment;
   ✔ said identification code of the shipping agent's shipment;
   ✔ information regarding a second logistic operator, responsible for collecting the goods from a departure logistic hub and take them to a destination logistic hub; and
   ✔ a digital signature univocally associated to the identity of a physical person authorized by the shipping agent to operate on the shipping agent's device;
- one device for said at least one first logistic operator responsible for collecting the goods from a respective sender and their transport to the departure logistic hub, each device of said at least one first logistic operator being configured to be operatively connected to said at least one data processing central unit and receive in input the data of the respective transport to be carry out and transmit thereto data comprising:
   ✔ information regarding the compliance of the goods to be transported; and
   ✔ a digital signature univocally associated to the identity of a physical person authorized by the first logistic operator to operate on the first logistic operator device;
- one device for said second logistic operator responsible for taking the goods from the departure logistic hub and transporting them to the destination logistic hub, said device of said second logistic operator being configured to be operatively connected to said at least one data processing central unit and receive in input the data of the respective transport to be carried out and transmit thereto data comprising:
   ✔ information regarding the compliance of the goods to be transported; and
   ✔ a digital signature univocally associated to the identity of aa physical person authorized by the second logistic operator to operate on the device of the second logistic operator;
- a consignee's device for said at least one consignee, configured to be operatively connected to said at least one data processing central unit and receive in input the data of the goods received at said destination logistic hub and to transmit thereto data comprising:
   ✔ information regarding the compliance of the received goods, and
   ✔ a digital signature univocally associated to the identity of a physical person authorized by the consignee to operate on the consignee's device;
wherein said data processing central unit is configured to:
- receive in input each digital signature and the data transmitted by each device of each sender, each device of the first logistic operator, said shipping agent's device, said device of said second logistic operator and each device of said at least one consignee and, upon receipt of each digital signature also store said digital signature and the corresponding data on said non-editable digital repository;
- associate the logistic information on the shipment of each sender, with the logistic information on the shipping agent's shipment, based on said received shipment identification codes of each sender and said identification code of the shipping agent's shipment;
- share, with said shipping agent's device, based on the identification code of the shipping agent's shipment, the digital signature received from the device (6) of the first logistic operator and from the device of the second logistic operator as well as the compliance information of the goods transmitted therefrom, stored on said non-editable digital repository;
- share, with each device of each sender, based on the identification code of the shipment of each sender and the identification code of the shipping agent's shipment, the digital signature received from the device of the first logistic operator and from the device of the second logistic operator as well as the information on the compliance of the goods shipped by the senders, transmitted therefrom, stored on the non-editable digital repository; as well as
- upon receipt of each digital signature received from a device of said at least one consignee, share said digital signature with the shipping agent's device and based on the identification code of the shipment of each sender and the identification code of the shipping agent's shipment also with each device of each sender whose goods have been received by said at least one consignee.

According to another aspect of the invention, said system can comprise:
- one device for at least one third logistic operator responsible for taking over the goods from the destination logistic hub transporting them to a final consignee, said device of said third logistic operator being configured to be operatively connected to said at least one data processing central unit and receive in input the data of the respective transport to be carried out and transmit thereto data comprising:
   ✔ information regarding the compliance of the goods to be transported; and
   ✔ one digital signature univocally associated to the identity of a physical person authorized by the third logistic operator to operate on the device of the third logistic operator;
- one consignee's device for said at least one final consignee, configured to be operatively connected to said at least one data processing central unit and receive in input the data of the goods, received at a final destination, and transmit thereto data comprising:
   ✔ information regarding the compliance of the received goods, and
   ✔ a digital signature univocally associated to the identity of the final consignee, if the final consignee is a physical person, or univocally associated to the identity of a physical person authorized by the final consignee to operate on the device of the final consignee;
wherein said data processing central unit can be configured to:
- receive in input also each digital signature from said device of said third logistic operator and from each device of said final consignee and, upon receipt of each digital signature, also store said digital signature and the corresponding data received on said non-editable digital repository;
- share, with said shipping agent's device, based on the identification code of the shipping agent's shipment, the digital signature received from the device of the third logistic operator and the information on the compliance of the goods transmitted therefrom, stored in said non-editable digital repository;
- share, with each device of each sender, based on the identification code of the shipment of each sender and the identification code of the shipping agent's shipment, the digital signature received from the device of the third logistic operator and the information on the compliance of the goods shipped by the senders, transmitted by the device of the third logistic operator, stored on the non-editable digital repository; as well as
- upon receipt of each digital signature received by the device of the final consignee, share said digital signature with said shipping agent's device and, based on the identification code of the shipment of each sender and the identification code of the shipping agent's shipment, also with each device of each sender, whose goods have been received by the final consignee.

According to a further aspect of the invention, said shipping agent's device can be configured to transmit to said data processing central unit, also:
✔ data comprising the logistic information on the shipment of each sender;
✔ one identification code of the shipment of each sender; and
✔ one digital signature on behalf of each sender, said digital signature being univocally associated to the identity of a physical person authorized by the shipping agent to operate on the shipping agent's device.

According to an additional aspect of the invention, said non-editable digital repository can comprise one block-chain or one technology of the DLT family (Distributed Ledger Technologies).

According to another aspect of the invention, said digital signature is an advanced digital signature, obtained through a two-factor authentication and geolocation, and it always comprises the date, time and place wherein the digital signature has been rendered.

According to a further aspect of the invention, each device of each sender can be configured to generate one document, optionally a paper document or a digital document, including the data stored on said non-editable digital repository, regarding the goods of the senders shipped to the respective consignee, as well as, when available, at least the digital signatures shared by the data processing central unit.

According to an additional aspect of the invention, each shipping agent's device can be configured to generate, on behalf of each sender, one document optionally a paper document or a digital document, including the data stored on said non-editable digital repository, regarding the goods that each sender ships to the respective consignee, as well as, when available, at least the digital signatures shared by the data processing central unit.

According to another aspect of the invention, each shipping agent's device can be is configured to generate one document, optionally a paper document or a digital document containing the data stored on said non-editable digital repository, regarding all the goods of all senders, shipped to said at least one consignee, as well as, when available, at least the digital signatures shared by the data processing central unit.

It is also a specific object of the invention a method for secure sharing of information regarding road transport or Roll-on/Roll-off transport, organized by a shipping agent, of goods sent by two or more senders to at least one consignee, through the same means of transport and through use of at least one first logistic operator and the at least one second logistic operator, with a system as described above, said method comprising:
A. transmitting to the data processing central unit, for each sender, said logistic information on the shipment of each sender, said identification code of the shipment of each sender, said identification code of the shipping agent's shipment, and the respective digital signature, as confirmation of the correctness of the transmitted information, said logistic information on the shipment of each sender, said identification code of the shipment of each sender, said identification code of the shipping agent's shipment and said digital signature being sent
   by the sender's device, and said digital signature being univocally associated to the sender's identity, if the sender is a physical person, or to the identity of a physical person authorized by the sender to operate on the sender's device; or
   by the shipping agent's device, when the shipping agent acts on behalf of the sender, and said digital signature is univocally associated to the identity of a physical person authorized by the shipping agent to operate on the shipping agent's device;
B. transmitting to the data processing central unit, through the shipping agent's device, data comprising the logistic information on the shipping agent's shipment and the identification code of the shipping agent's shipment and the digital signature of the shipping agent univocally associated to the identity of a physical person authorized by the shipping agent to operate on the shipping agent's device, as confirmation of the correctness of the transmitted information;
C. associating, by the data processing central unit, the logistic information on the shipment of each sender, with the logistic information on the shipping agent's shipment, based on the received identification codes of the shipment of each sender and the identification code of the shipping agent's shipment;
D. upon arrival of the first logistic operator at a respective sender, transmitting to the data processing central unit, through the device of the first logistic operator or through the sender's device, possible information regarding the compliance of the goods that the first logistic operator is to transport to the departure logistic hub and the digital signature of the first logistic operator univocally associated to the identity of a physical person authorized by the first logistic operator to operate on the device of the first logistic operator, as confirmation of the correctness of the transmitted information;
E. upon arrival of the second logistic operator at the departure logistic hub, transmitting to the data processing central unit, through the device of the second logistic operator, possible information on the compliance of the goods to be transported to the destination logistic hub and the digital signature of the second logistic operator univocally associated to the identity of a physical person authorized by the second logistic operator to operate on the device of the second logistic operator, as confirmation of the correctness of the transmitted information;
F. upon arrival of the goods at said destination logistic hub, transmitting to the data processing central unit, through the device of the consignee, possible information on the compliance of the received goods, and the digital signature of the consignee univocally associated to the identity of a physical person authorized by the consignee to operate on the consignee's device, as confirmation of the correctness of the transmitted information;
wherein
upon receipt of each digital signature of each device, the data processing central unit transmits and stores on the non-editable digital repository each digital signature as well as the respective data and the respective received information and
upon receipt of the digital signature transmitted by the device of the consignee, the data processing central unit shares the digital signature of the consignee with the shipping agent's device and, based on the identification code of the shipment of each sender and the identification code of the shipping agent's shipment also with each device of each sender whose goods have been received by the consignee.

According to another aspect of the invention, said method can comprise:
H. upon arrival of the third logistic operator at the destination logistic hub, transmitting to the data processing central unit, through the device of the third logistic operator, possible information on the compliance of the goods to be transported to the final destination and the digital signature of the third logistic operator univocally associated to the identity of a physical person authorized by the third logistic operator to operate on the device of the third logistic operator, as confirmation of the correctness of the transmitted information;
I. upon arrival of the goods at said final destination, transmitting to the data processing central unit, through the device of the final consignee, possible information on the compliance of the received goods, and the digital signature of the final consignee univocally associated to the identity of the final consignee, if the final consignee is a physical person, or univocally associated to the identity of a physical person authorized by the final consignee to operate on the device of the final consignee, as confirmation of the correctness of the transmitted information;
wherein
upon receipt of each digital signature of the third logistic operator and the final consignee, the data processing central unit transmits and stores on the non-editable digital repository each digital signature as well as the respective data and the respective received information, and
upon receipt of the digital signature transmitted by the device of the final consignee, the data processing central unit shares the digital signature of the final consignee with the shipping agent's device and, based on the identification code of the shipment of each sender and the identification code of the shipping agent's shipment also with each device of each sender whose goods have been received by the final consignee.

It is furthermore a specific object of the invention a computer program, comprising instructions that cause the execution of the method described above, by the system indicated above.

Yet it is a specific object of the inventio a computer readable data carrier, having stored thereon a computer program as above.

The system and its method of operation offer numerous advantages.

In fact, with them, the number of interactions among the parties involved in the shipment is reduced, as well as the number of documents exchanged among them. The time and costs associated with the retrieval and verification of the information to be exchanged are reduced, and the certainty of the delivery of the goods at the recipients is easily achieved, as well as the knowledge that the information, and therefore the corresponding documents that will be generated from it, have not been altered or forged. With the present invention, the commercial confidentiality of the senders is preserved, the likelihood of human or intentional errors in information sharing is reduced overall, and the risks of incurring penalties as a result of administrative/tax audits are also reduced.

The present invention will now be described, by way of illustration but not limitation, according to its preferred embodiments, with particular reference to the attached drawing Figures, wherein:
Figure 1 schematically shows a system according to the invention;

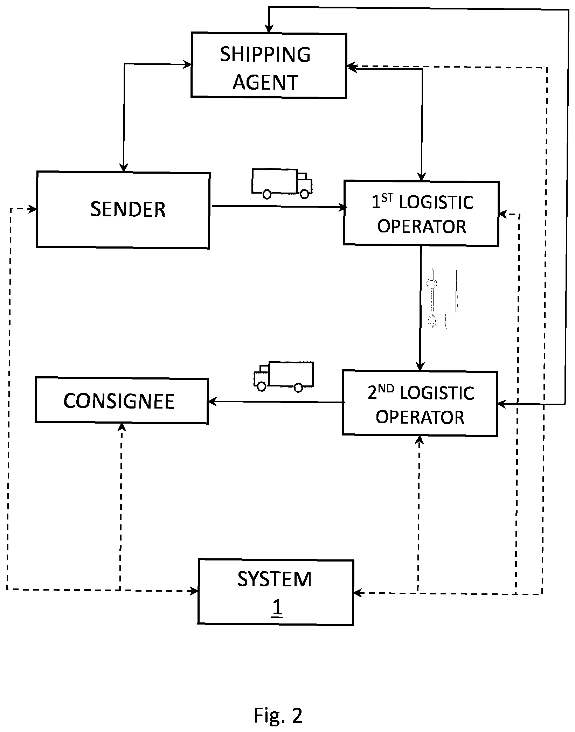

Figure 2 is a representation schematically illustrating the parties involved in the transportation of goods and the interaction of those parties with each other and with the system of the invention;

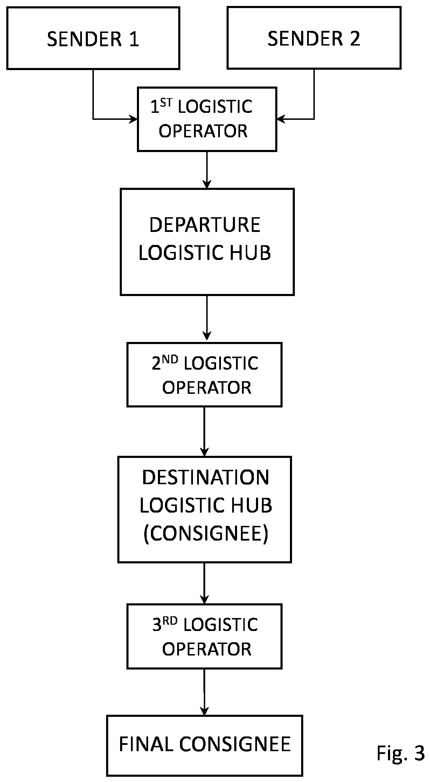

Figure 3 illustrates the route taken by goods sent from two senders to a consignee according to the groupage mode; and

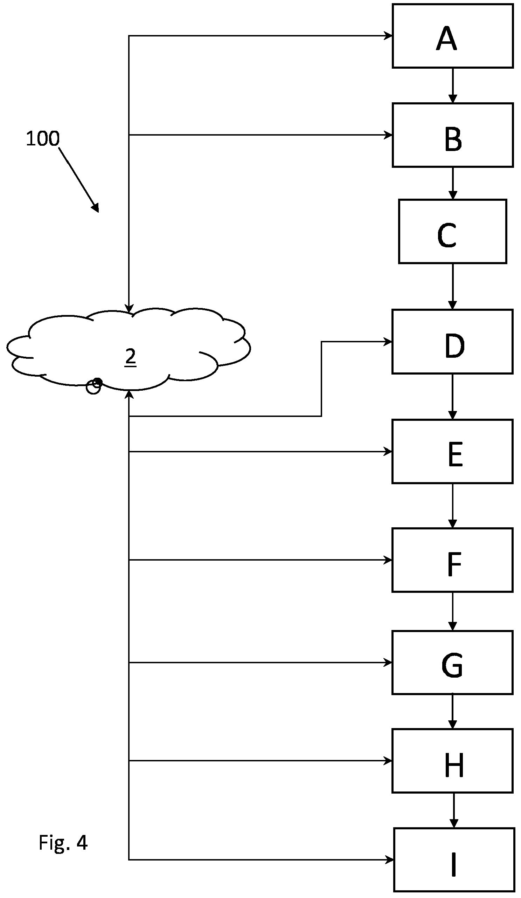

Figure 4 shows a flow chart of the method of the present invention.

Before going into the merits of the present invention, it should be pointed out that although the system and method of the present invention are particularly suited to be used in the transportation of goods by road, in which several senders send goods to several consignees, through the same means of transport in a shipment organized by a shipping agent with whom each sender has entered into a shipping contract, in the present description, for simplicity, reference will be made to a simple case wherein several senders send goods to the same consignee. In any case, it is quite evident that the present invention can be easily applied to more complex cases not described herein.

It will also be noted that, the term "sender" in this description and in the following claims means a private individual or company whose goods are to be shipped to a consignee. The sender may also be a shipping agent, if the shipping agent has received a shipment mandate from the private individual or company whose goods are to be shipped to a consignee. The term "consignee" in the present description and in the following claims means a destination logistic hub, to which the goods are brought, after being picked up at each sender and loaded onto the same means of transport at a departure logistic hub. The term "consignee," in this description and in the following claims may also mean a final consignee party, e.g., an individual or a company, to whom the goods are to be delivered after reaching the destination logistics hub. The term "logistics operator," in this description and in the following claims means any party contracted by a shipping agent, e.g., a carrier, courier, or transporter, who will be responsible for transporting the goods in the shipment, along at least part of the route between the sender and the final consignee. The term "device" referred to a party involved in the shipment of a good, in the present description and in the following claims, also means any appliance of which that person is in full possession, e.g., his or her tablet, pc, smartphone, PDA, or any other suitable device through which that party can be legally digitally identified. Finally, the term "transmitting" or "receiving" in this description and in the following claims, referred to data and/or information being "transmitted" from device A to device B or "received" by device B from device A, means a transfer of such data and/or information or a copy thereof in the sense described above (from A to B) regardless of which device is actively performing the actual transfer of such data and/or information. Similarly, the term "sharing," in this description and in the following claims, referred to data and/or information that is "shared" between two system components, means that such data and/or information or a copy thereof, present on one system component, can also be accessed by the other system component, for example, because it is transmitted to the other component or because the other component can actively download it.

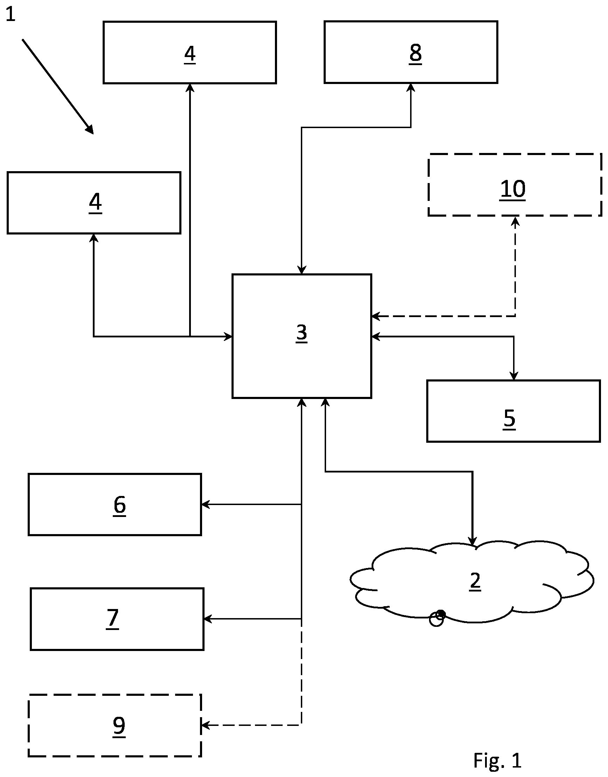

A system for secure sharing of information regarding the transportation of goods by road, according to the present invention, is represented in Figure 1 and herein indicated with reference number 1 and comprises at least one non-editable digital repository 2, optionally based on blockchain technology, and at least one data processing central unit 3, operatively connected to said at least one non-editable digital repository 2.

The system 1 according to the invention also comprises at least one sender's device 4, for each sender involved in the shipment (two are the senders' devices 4 represented in Fig. 1), wherein each device 4 of the sender is configured to be operatively connected to the at least one data processing central unit 3 and transmit thereto data comprising the logistic information on that sender's shipment.

Specifically, the logistic information on the shipment of that sender is at least the one specified in Art. 6 of the Convention on the Contract for the International Carriage of Goods by Road (CMR) signed in Geneva on May 19, 1956, as amended by the Protocol of July 5, 1978, and includes, for example, the name of the sender, the name of the consignee, loading place and date, the city or country of delivery of the goods, the data of at least one first logistic operator that will be in charge of transporting the goods from the sender to a departure logistic hub, as well as data describing the goods being shipped, namely: the particular markings and their numbers, the number of packages to be shipped, the type of packaging, the gross weight or quantity of the same, etc.

The device 4 of the sender is also configured to transmit to the data processing central unit 3 one identification code of the sender's shipment, optionally in the form of a QR-code, for example one identification code that in the management program thereof identifies the shipment of those goods, and advantageously, also one identification code of the shipping agent's shipment, optionally in the form of a QR-code, the latter being released by the shipping agent when the shipment contract has been signed. The sender's device 4 is also configured to transmit to the data processing central unit 3 the digital signature of the sender (if the sender is not a physical person, it is a company instead, the signatory is a physical person authorized by that company), which will be discussed in more detail below.

The system 1 of the present invention also comprises a shipping agent's device 5, configured to be operatively connected to the data processing central unit 3, to transmit thereto data comprising at least one part of the logistic information on the shipping agent's shipment, as well as the identification code of the shipping agent's shipment, optionally in the form of QR-code, that identification code being also sent to each sender with the stipulation of the respective shipment contract.

In particular, according to a first embodiment of the system 1 of the present invention, the shipping agent's device is configured to transmit to the data processing central unit 3, at least the information indicated in the Art. 6 of the Convention on the contract for the international carriage of goods by road (CMR) referred to above, including data identifying a second logistic operator that will be responsible for transporting the goods from a departure logistic hub to a destination logistic hub, except the data describing the goods under shipment, i.e. the information regarding the number of packages, their particular markings and their numbers, at the gross weight or quantity otherwise expressed of all goods of all senders for whom the shipping agent is handling the shipment, to be transported between the departure logistic hub and the destination logistic hub, as will be better described in the following. the shipping agent's device 5 is also configured to transmit to the data processing central unit 3 also the digital signature of the shipping agent, which will be discussed in more detail below. The digital signature of the shipping agent is, however, a digital signature of the owner of the shipping agent's device 5, of a physical person authorized by the shipping agent to operate on the invention system 1.

According to a further embodiment of the present invention, the shipping agent's device 5 is also configured to transmit to the data processing central unit 3, the logistic information on the shipment of a sender, for example when the shipping agent acts in the name and on behalf of the sender. The logistic information on the shipment of the sender is, as said above, at least the one indicated in the Art. 6 of the Convention on the contract for the international carriage of goods by road (CMR) signed in Geneva on 19 May 1956, as amended by the protocol of 5 July 1978 and includes, for example, the name of the sender, the name of the consignee, loading place and date, the city or country of delivery of the goods, the data of at least one first logistic operator that will be responsible for transporting the goods from the sender to a departure logistic hub, as well as data describing the goods under shipment, i.e.: the particular markings and their numbers, the number of packages to be shipped, the type of packaging, the gross weight or quantity of the same, etc..

The shipping agent's device 5 is also configured to transmit to the data processing central unit 3 also one identification code of the sender's shipment, that in this case is for example one identification code that in the management application thereof identified the shipment of the goods for that sender, in the name and on behalf of whom, the shipping agent is acting, as well as the identification code of the shipping agent's shipment, sent to that sender with the stipulation of the shipment contract. The shipping agent's device 5, according to this variant of the invention, is also configured to transmit to the data processing central unit 3 the digital signature of the shipping agent, replacing that of the sender in whose name and on whose behalf it acts.

The system 1 of the present invention also comprises one device 6 for at least one first logistic operator, responsible for collecting the goods from one or more senders and transporting them to the departure logistic hub. Each device 6 of the first logistic operator is configured to be operatively connected to the data processing central unit 3 and receive in input the data of the respective transport to be carried out and transmit thereto data comprising both information regarding the compliance of the goods to be transported (for example, note of acceptance, with reservation, of goods) and the digital signature of the first logistic operator (for example the digital signature of a driver of the first logistic operator, owner of device 6), which will be discussed in more detail below. With reference to the compliance of the goods to be transported, in some cases it may happen that these are damaged already from start, therefore the first logistic operator (the driver thereof) must have the possibility to report it so that, if the goods arrive at their destination damaged or nonconforming, there can be proper handling of returns and refunds among the parties involved.

According to one variant of the present invention, when the driver of the first logistic operator is not provided with a suitable device, to facilitate operations and upon "visual" recognition by a person appointed by the sender, the driver of the first logistics operator may transmit the above data including both information regarding the conformity of the goods to be transported and the digital signature of the first logistics operator through a device made available to the sender.

Similarly, the system 1 of the present invention also comprises a device 7 of a second logistic operator, responsible for taking over the goods from the departure logistic hub and their transport through the same means of transport, to the destination logistic hub. The device 7 of the second logistic operator is configured to be operatively connected to the at least one data processing central unit 3 and receive in input the data of the respective transport to be carried out and transmit thereto data comprising both information regarding the compliance of the goods to be transported (for the same reasons descried above) and the digital signature of the second logistic operator, which will be discussed in more detail below. Also in this case, the person who digitally signs through device 7 is a driver (physical person) owner of the device 7, authorized by the second logistic operator.

The system 1 of the present invention also comprises a consignee's device 8 for the consignee of the goods being shipped, the consignee's device being configured to be operatively connected to the at least one data processing central unit 3 and receive in input the data of the goods received at the destination logistic hub and transmit to the data processing central unit data comprising both the information regarding the compliance of the received goods, for the reasons above, and the digital signature of the consignee, which will be discussed in more detail below. As above, the person who digitally sings through the consignee's device 8 is the owner of that device as well as an authorized physical person of the destination logistic hub.

It will be noted that, as anticipated above, when the destination logistic hub is not the shipment final delivery place of the shipment and the goods shipped by the senders needs to be taken over, for example by a third logistic operator at the destination logistic hub and transported to the final consignee, the system 1 of the present invention comprises in this case also at least one device 9 of the third logistic operator, the device, like the other devices of the other logistic operators being configured to be operatively connected to the at least one data processing central unit 3 and receive in input therefrom the data of the respective transport to be carried out and transmit data comprising both information regarding the compliance of the goods to be transported and the digital signature of the physical person authorized by the third logistic operator.

The system 1 of the invention also comprises one device 10 of the final consignee, configured to be operatively connected to the at least one data processing central unit 3 and receive in input the data of the goods received at the final destination and transmit thereto data comprising both information regarding the compliance of the received goods, and the digital signature of the final consignee if the final consignee is physical person, alternatively the digital signature of the physical person authorized by the final consignee.

According to a preferred embodiment of the present invention, the sender's device and the shipping agent's device are configured to transmit the respective data regarding the goods under shipment to the data processing central unit 3, in any suitable way. For example, through a spreadsheet filled out on their device and then transmitted to the data processing central unit 3, or through an API interface (Application Programming Interface) with a respective management system or ERP or via data entry. The device of each logistic operator and the device of the consignee are both configured to transmit the respective notes/information on the compliance of the goods being shipped to the data processing central unit 3, in any suitable way, optionally through direct connection or link to the processing central unit 3. With reference to the digital signature that each device is configured to transmit to the data processing central unit 3, that digital signature is advantageously obtained through a two-factor authentication of the physical person authorized for signature with each device and with geolocation, so that the digital signature, when it is transmitted to the data processing central unit 3 (in any suitable way, optionally through direct connection to that data processing central unit 3), it always comprises the date, time and place wherein the digital signature has been rendered. The digital signature is advantageously an advanced electronic signature fully compliant with the UNECE 2008 Additional Protocol on the Electronic Consignment Note (e-CMR) - available at the link (https://unece.org/DAM/trans/conventn/e-CMRe.pdf - which uniquely guarantees the identity of the physical person who signs, for example according to the EIDAS protocols and, according to the method of operation of the invention system 1, which will be better explained below, is sent by each person authorized by each party involved in the shipment, using a respective device, as confirmation of the correctness of the data transmitted by that device to the data processing central unit 3.

In the system 1 described above, the data processing central unit 3 is advantageously configured to receive in input and save the data transmitted by each sender's device 4, by the shipping agent's device 5, by each device 6 of the first logistic operator, by the device 7 of the second logistic operator, by the consignee's device 8 and possibly also by the device of the third logistic operator 9 and by the device 10 of the final consignee. The data processing central unit is further configured to associate the logistic information on the shipment of each sender, for example received by each device 4 of sender or from the shipping agent's device 5, when the shipping agent acts in the name and on behalf of a sender, with the logistic information on the shipping agent's shipment, based on the received identification codes of the shipment of each sender and the identification code of the shipping agent's shipment.

Upon receipt of a digital signature, the data processing central unit 3 is also configured to transmit and save on the non-editable digital repository 2, the digital signature and the corresponding data received by the respective device. Moreover, upon receipt of each digital signature received by a device 8 of the consignee, the data processing central unit 3 is advantageously configured to share that received digital signature with the shipping agent's device 5 and, based on the identification code of the shipment of each sender and the identification code of the shipping agent's shipment also with each device 4 of each sender whose goods have been received by the consignee.

Similarly, upon receipt of each digital signature possibly received by each device 10 of the final consignee, the data processing central unit 3 is configured to share that received digital signature with the shipping agent's device 5 and, based on the identification code of the shipment of each sender and the identification code of the shipping agent's shipment also with each device 4 of each sender whose goods have been received by the final consignee.

The data processing central unit 3 is also configured to share with the shipping agent's device 5, always based on the identification code of the shipping agent's shipment:
- the digital signature received from the first logistic operator, who has collected the goods from each sender and has transported them to the departure logistic hub, and the possible notes of the first logistic operator on the compliance of the goods, stored on the non-editable digital repository 2;
- the digital signature received from the second logistic operator, that has taken over the goods from the departure logistic hub and has taken them to the destination logistic hub, and the possible notes of the second logistic operator on the compliance of the goods, stored on the non-editable digital repository 2; and
- possibly, the digital signature received by the third logistic operator, that has taken over the goods from the destination logistic hub and has taken them to the final destination, and the possible notes of the third logistic operator on the compliance of the goods, stored on the non-editable digital repository 2.

The data processing central unit 3 is also configured to share with the sender's device 4 of each sender whose goods are involved in the shipment, always based on the identification code of that sender's shipment and the identification code of the shipping agent's shipment, the digital signature of each logistic operator as well as possible notes on the compliance of their goods, transmitted by each logistic operator to the data processing central unit 3.

In this way, each time the destination logistic hub or the final consignee transmit the digital signature through the respective devices, as confirmation of the receipt of the shipped goods, possibly also transmitting their notes on the compliance of the same, the sender of those goods can have access to the digital signature of the destination logistic hub or the final consignee shared by the processing central unit 3 and use it, for example, for the preparation of paper or digital documentation to be used for administrative/tax purposes.

In system 1 according to the invention, in fact, each sender's device 4 of each sender is configured to generate a respective waybill or CMR, in paper or digital form, containing the data stored in that non-editable digital repository 2, about its own goods sent to the respective consignee, as well as, when available,, the digital signature of the parties involved in the transportation, shared by the data processing central unit 3.

It should be noted that, when the shipping agent acts in the name and on behalf of a plurality of senders, after the logistic information on the shipment of each sender has been transmitted to the data processing central unit 3 through the shipping agent's device 5, when the shipping agent transmits to the data processing central unit 3 its own digital signature in substitution of the senders' signature in the name and on whose behalf it acts, upon receipt of that digital signature the data processing central unit 3 is advantageously configured to sharing such digital signature with each sender's device 4 of each sender in the name and on whose behalf the shipping agent acts. In this case, each one of the senders, through its own sender's device 4 can have access to the digital signature of the shipping agent acting in his name and on his behalf and can use it, for example, for the preparation of paper or digital documentation to be used for administrative/tax purposes.

Advantageously, in the system 1 according to the invention, also the shipping agent's device 5 is configured to generate a respective waybill or CMR, optionally in paper or digital form, including the data store on the non-editable digital repository 2, about all the goods of all senders that the shipping agent has shipped to the consignee on the same means of transport type. Such waybill or CMR will also contain, when available, the digital signature of the parties involved in the shipment (second logistic operator, consignee and, possibly also the third logistic operator and the final consignee), shared by the data processing central unit 3.

In the waybill or CMR, according to a particularly advantageous aspect of the invention, data describing all the goods of the shipping agent's shipment, transported by the same means of transport type by the departure logistic hub to the destination logistic hub, and in particular the "shipment codes", "markings and numbers", the "quantity of packages", the "type of packaging", the "description of the goods", the "gross weight" and the "Volume", are derived from the data processing central unit 3, based on the identification code of the sender's shipment and the identification code of the shipping agent's shipment, once they have been transmitted by the devices 4 of the respective senders or by the device of the shipping agent, when acting in the name and on behalf of the senders.

In this way, the shipping agent's device 5, when the shipping agent does not act in the name and on behalf of the senders, it simply transmits to the data processing central unit 3 only the logistic information on the shipping agent's shipment, without the data describing the goods, that have already been transmitted or that will be transmitted by the senders' devices 4, thereby reducing the risk of making unnecessary errors. The waybill or CMR of the shipping agent, according to one preferred variant of the present invention, may assume, at the above-mentioned fields "quantity of packages", "gross weight" and "volume", a value that represents the sum of all the values of the corresponding fields concerning the goods of each sender and, at the field " type of packaging", the value "MIXED" if the goods are transported with different packaging, while the "markings and numbers" field may have a value equal to the identification code of the shipping agent's shipment. Alternatively, according to a variant of the present invention, the shipping agent's waybill or CMR may indicate, at the above-mentioned fields "quantity of packages", "gross weight" and "volume", the corresponding values of the corresponding fields relating to the goods of each sender, therefore for each field it will contain as many values as the transported goods are in total, while in the "markings and numbers" field it will be possible to indicate the identification code of each sender's shipment, possibly followed by a progressive number, in the event that each shipment from each sender involves multiple goods..

According to a preferred embodiment of the invention, the system 1 is based on an IT architecture that advantageously uses Cloud Computing technologies, a memory (not shown in the Figures) included in the data processing central unit 3, a non-editable digital repository 2 and, optionally, through suitable API interfaces, installed on the devices of the senders, the shipping agent, the logistic operators and the consignees.

The system 1 of the invention described above implements a corresponding method 100, which also forms the object of the invention, for secure sharing information regarding road transport of goods, shipped by two or more senders to at least one consignee, through the same typology transport means in a shipment organized by a shipping agent.

Such method 100 requires, in a first step A, for each sender, transmitting to the data processing central unit 3 the logistic information on the shipment of each sender, one identification code of the shipment of that sender, one identification code of the shipment of the shipping agent, and after verification of the correctness of the transmitted information, also the respective digital signature for that sender and that, upon receipt of the digital signature, the data processing central unit 3 stored on the non-editable digital repository 2 the information and the received digital signature.

As will be noted, based on what has been described, the transmission of the aforementioned logistic information of the shipment of each sender can be carried out through each sender's device 4 of each sender or through the shipping agent's device 5, when it acts in the name and on behalf of the sender. Analogously, the digital signature for each sender can be transmitted by the device 4 of each sender or by the shipping agent's device 5 when the shipping agent acts in the name and on behalf of the sender.

The method 100 of the invention also provides, in a step B, which can be partly carried out in parallel with phase A, to transmit via the shipping agent's device 5, to the data processing central unit 3, data comprising the logistic information on the shipping agent's shipment and the identification code of the shipping agent's shipment and, after verification of the correctness of the transmitted information, the digital signature of the shipping agent through the shipping agent's device 5. The method then provides that, upon receipt of the digital signature, the data processing central unit 3 stores on the non-editable digital repository 2 the information and the received digital signature.

The method 100 of the invention therefore provides for a subsequent step C, wherein the data processing central unit 3 associates the logistic information on the shipment of each sender, with the logistic information on the shipping agent's shipment, based on the identification codes of each shipment of each sender and the identification code of the shipping agent's shipment received.

Then, the method 100 of the invention includes a subsequent step D, which is implemented upon arrival of the first logistic operator at a respective sender wherein, through the logistic operator device 6, possible information regarding the compliance of the goods that the logistic operator needs to transport to the departure logistic hub and the digital signature of the first logistic operator are transmitted to the data processing central unit 3. The transmission of the digital signature of the first logistic operator is implemented after the verification of the compliance of the goods to be transported with respect to the information received from the data processing central unit 3, on the device 6 of the first logistic operator and possibly after having sent to the data processing central unit 3 information regarding the compliance of those goods. he method then requires that, upon receipt of the digital signature, the data processing central unit 3 stored on the non-editable digital repository 2 the information and the digital signature received.

Similarly, the method 100 of the invention provides a subsequent step E that typically occurs, upon arrival of the second logistic operator at the departure logistic hub, wherein through the device 7 of the second logistic operator the second logistic operator transmits to the data processing central unit 3 possible information on the compliance of the goods to be transported to the destination logistic hub, with respect to the information received from the data processing central unit 3and the digital signature of the second logistic operator. the method then provides that, upon receipt of the digital signature, the data processing central unit 3 stores on the non-editable digital repository 2 the information and the digital signature received.

Then, the method 100 of the invention includes a step F, implemented upon arrival of the goods at said destination logistic hub, wherein, via the consignee's device 8, the consignee transmits to the data processing central unit 3, possible information on the compliance of the received goods, with respect to the information on those goods received from the data processing central unit 3 and the digital signature of the consignee.

According to the invention method 100, upon receipt of the digital signature transmitted by the al consignee's device 8, the present invention method 100 requires that the data processing central unit 3, shares the digital signature of the consignee with the shipping agent's device 5 and based on the identification code of the shipment of each sender and the identification code of the shipping agent's shipment also with each device 4 of each sender whose goods have been received by the consignee.

Optionally, in case the destination logistic hub is not the final consignee, the invention method comprises one subsequent step H, which is implemented upon arrival of the third logistic operator at the destination logistic hub, wherein via the third logistic operator's device 9 the third logistic operator transmits to the data processing central unit 3 possible information on the compliance of the goods to be transported to the final destination, with respect to the information received from the data processing central unit 3, and the digital signature of the third logistic operator. Upon receipt of the digital signature, the method provides that the data processing central unit 3 stores on the non-editable digital repository 2 the information and the digital signature received.

Therefore, the invention method 100 also comprises one following step I, implemented upon arrival of the goods at the final destination, wherein via the final consignee's device 10 the final consignee transmits to the data processing central unit 3 possible information on the compliance of the received goods, with respect to the information received from the data processing central unit 3, and the digital signature of the final consignee. Then, upon receipt of the digital signature transmitted by the final consignee's device 10, the method 100 of the present invention provides that the data processing central unit 3 shares the digital signature of the final consignee with the shipping agent's device 5 and, based on the identification code of the shipment of each sender and the identification code of the shipping agent's shipment also with each device 4 of each sender whose goods have been received by the final consignee.

In this way, the digital signatures of the consignees (the destination logistic hub or the final consignee) can be included in the waybill or CMR, both in paper or digital form, of the shipping agent and of each sender and maintained for administrative or fiscal purposes.

According to one variant of the invention, after transmission to the data processing central unit 3 of the logistic information of the sender's shipment, thus comprised the information regarding the first logistic operator responsible for collecting the goods at the sender and take them to a departure logistic hub, the invention method 100 comprises one step wherein a corresponding accreditation signal, for example comprising access credentials to system 1 and/or a link with which the first logistic operator can be accredited and/or operate on the system, is transmitted to the first logistic operator's device 6. Similarly, according to another variant of the invention, when the shipping agent, via the shipping agent's device 5, sends to the data processing central unit 3 the logistic information of the shipping agent's shipment, therefore including the information regarding the second logistic operator responsible for taking over the goods from the departure logistic hub and taking them to a destination logistic hub, the invention method 100 comprises one step wherein a corresponding accreditation signal, for example comprising access credentials to system 1 and/or a link with which the second logistic operator can be accredited and/or operate on the system, is transmitted to the second logistic operator's device 7. The same is valid in case a third logistic operator is to be involved in the transportation of the goods from the destination logistic hub to the final destination.

Specific object of the invention is also a computer program, comprising instructions which, when executed, cause the implementation of method 100 by the invention system 1. The computer program is a software application, optionally made available in SaaS (Software as a Service) mode between the parties involved in the transportation of goods according to the methods described above, who can connect to system 1, optionally with a two- factors authentication of any suitable type, through their respective proprietary devices. According to an advantageous aspect of the invention, the computer program is developed in such a way as to guarantee interoperability with other platforms and management software (TMS, PCS, ERP) of the parties involved in the shipment. Among these parties involved, although not mentioned above, the authorities responsible for verifying compliance with the regulations related to the transport of goods, for example the Revenue Agency, the Customs Agency, the port system authorities, etc. are also included, who will be able, for example, to accredit themselves on system 1 and view the entire flow of data and information exchanged between the parties involved and stored on the non-editable digital repository 2. The fact that the data regarding the transport of goods are stored on this non-editable digital repository 2, together with the digital signatures of the parties involved, makes the data itself extremely reliable, allows compliance with the relevant regulations, therefore controls of the aforementioned authorities are easier and the probability of error is minimized.

Finally, a specific object of the invention also is a computer-readable data carrier, having the aforementioned computer program stored in it.

In view of the above, it appears clear that the system 1 and the method 100 described above achieve the objects set out in the introduction. In fact, they allow the transfer of information between the parties involved in the transport of goods, in particular transported according to the "groupage" method, to be simplified, made safer, cheaper, more reliable and faster. System 1 and method 100 allow to easily trace the shipment of a good and obtain in a simple and certified way the administrative and fiscal documentation, in paper or digital form, associated with the shipment of the goods.

Hereinabove, the preferred embodiments have been described and variants of the present invention have been suggested.

Thus, for example, in the above description reference was made to a first, a second and a third logistics operator. However, the present invention is also easily applicable in the case wherein the logistics operator is one, and the goods are taken over by different operatives (for example drivers), at pickup, at the departure logistic hub or at the destination logistic hub.

## Claims

1. System (1) for secure sharing of information regarding road transport or Roll-on/Roll-off transport, organized by a shipping agent, of goods sent by one or more senders to at least one consignee, through the same type of transport means and through the use of at least one first logistic operator and at least one second logistic operator, said system (1) comprising:
- at least one non-editable digital repository (2);
- at least one data processing central unit (3), operatively connected to said at least one non-editable digital repository (2);
- a sender's device (4) for each sender, each sender's device (4) being configured to be operatively connected to said at least one data processing central unit (3), to transmit thereto:
✔ data comprising logistic information on the shipment of that sender;
✔ one identification code of that sender's shipment;
✔ one identification code of the shipping agent's shipment; and
✔ a digital signature univocally associated to the sender's identity, if the sender is a physical person, or univocally associated to the identity of a physical person authorized by the sender to operate on the sender's device (4);
- at least one shipping agent's device (5), configured to be operatively connected to said at least one data processing central unit (3), to transmit thereto:
✔ data comprising at least one part of the logistic information on the shipping agent's shipment;
✔ said identification code of the shipping agent's shipment;
✔ information regarding a second logistic operator, responsible for collecting the goods from a departure logistic hub and take them to a destination logistic hub; and
✔ a digital signature univocally associated to the identity of a physical person authorized by the shipping agent to operate on the shipping agent's device (5);
- one device (6) for said at least one first logistic operator responsible for collecting the goods from a respective sender and their transport to the departure logistic hub, each device (6) of said at least one first logistic operator being configured to be operatively connected to said at least one data processing central unit (3) and receive in input the data of the respective transport to be carry out and transmit thereto data comprising:
✔ information regarding the compliance of the goods to be transported; and
✔ a digital signature univocally associated to the identity of a physical person authorized by the first logistic operator to operate on the first logistic operator device (6);
- one device (7) for said second logistic operator responsible for taking the goods from the departure logistic hub and transporting them to the destination logistic hub, said device (7) of said second logistic operator being configured to be operatively connected to said at least one data processing central unit (3) and receive in input the data of the respective transport to be carried out and transmit thereto data comprising:
✔ information regarding the compliance of the goods to be transported; and
✔ a digital signature univocally associated to the identity of aa physical person authorized by the second logistic operator to operate on the device (7) of the second logistic operator;
- a consignee's device (8) for said at least one consignee, configured to be operatively connected to said at least one data processing central unit (3) and receive in input the data of the goods received at said destination logistic hub and to transmit thereto data comprising:
✔ information regarding the compliance of the received goods, and
✔ a digital signature univocally associated to the identity of a physical person authorized by the consignee to operate on the consignee's device (8);
wherein said data processing central unit (3) is configured to:
- receive in input each digital signature and the data transmitted by each device (4) of each sender, each device (6) of the first logistic operator, said shipping agent's device (5), said device (7) of said second logistic operator and each device (8) of said at least one consignee and, upon receipt of each digital signature also store said digital signature and the corresponding data on said non-editable digital repository (2);
- associate the logistic information on the shipment of each sender, with the logistic information on the shipping agent's shipment, based on said received shipment identification codes of each sender and said identification code of the shipping agent's shipment;
- automatically and selectively share, with said shipping agent's device (5), based on the identification code of the shipping agent's shipment, the digital signature received from the device (6) of the first logistic operator and from the device (7) of the second logistic operator as well as the compliance information of the goods transmitted therefrom, stored on said non-editable digital repository (2);
- automatically and selectively share, with each device (4) of each sender, based on the identification code of the shipment of each sender and the identification code of the shipping agent's shipment, the digital signature received from the device (6) of the first logistic operator and from the device (7) of the second logistic operator as well as the information on the compliance of the goods shipped by the senders, transmitted therefrom, stored on the non-editable digital repository (2); as well as
- upon receipt of each digital signature received from a device (8) of said at least one consignee, automatically share said digital signature with the shipping agent's device (5) and based on the identification code of the shipment of each sender and the identification code of the shipping agent's shipment also with each device (4) of each sender whose goods have been received by said at least one consignee.

2. System (1) according to claim 1, comprising:
- one device (9) for at least one third logistic operator responsible for taking over the goods from the destination logistic hub transporting them to a final consignee, said device (9) of said third logistic operator being configured to be operatively connected to said at least one data processing central unit (3) and receive in input the data of the respective transport to be carried out and transmit thereto data comprising:
✔ information regarding the compliance of the goods to be transported; and
✔ one digital signature univocally associated to the identity of a physical person authorized by the third logistic operator to operate on the device (9) of the third logistic operator;
- one consignee's device (10) for said at least one final consignee, configured to be operatively connected to said at least one data processing central unit (3) and receive in input the data of the goods, received at a final destination, and transmit thereto data comprising:
✔ information regarding the compliance of the received goods, and
✔ a digital signature univocally associated to the identity of the final consignee, if the final consignee is a physical person, or univocally associated to the identity of a physical person authorized by the final consignee to operate on the device (10) of the final consignee;
wherein said data processing central unit (3) is configured to:
- receive in input also each digital signature from said device (9) of said third logistic operator and from each device (10) of said final consignee and, upon receipt of each digital signature, also store said digital signature and the corresponding data received on said non-editable digital repository (2);
- automatically and selectively share, with said shipping agent's device (5), based on the identification code of the shipping agent's shipment, the digital signature received from the device (9) of the third logistic operator and the information on the compliance of the goods transmitted therefrom, stored in said non-editable digital repository (2);
- automatically and selectively share, with each device (4) of each sender, based on the identification code of the shipment of each sender and the identification code of the shipping agent's shipment, the digital signature received from the device (9) of the third logistic operator and the information on the compliance of the goods shipped by the senders, transmitted by the device of the third logistic operator, stored on the non-editable digital repository (2); as well as
- upon receipt of each digital signature received by the device (10) of the final consignee, automatically share said digital signature with said shipping agent's device (5) and, based on the identification code of the shipment of each sender and the identification code of the shipping agent's shipment, also with each device (4) of each sender, whose goods have been received by the final consignee.

3. System (1) according to claim 1 or 2, wherein said shipping agent's device (5) is configured to transmit to said data processing central unit (3), also:
✔ data comprising the logistic information on the shipment of each sender;
✔ one identification code of the shipment of each sender; and
✔ one digital signature on behalf of each sender, said digital signature being univocally associated to the identity of a physical person authorized by the shipping agent to operate on the shipping agent's device (5).

4. System (1) according to any previous claim, wherein said non-editable digital repository (2) comprises one block-chain or one technology of the DLT family (Distributed Ledger Technologies).

5. System (1) according to any previous claim, wherein said digital signature is an advanced digital signature, obtained through a two-factor authentication and geolocation, and it always comprises the date, time and place wherein the digital signature has been rendered.

6. System (1) according to any previous claim, wherein each device (4) of each sender is configured to generate one document, optionally a paper document or a digital document, including the data stored on said non-editable digital repository (2), regarding the goods of the senders shipped to the respective consignee, as well as, when available, at least the digital signatures shared by the data processing central unit (3).

7. System (1) according to any claim 1 to 5, wherein each shipping agent's device (5) is configured to generate, on behalf of each sender, one document optionally a paper document or a digital document, including the data stored on said non-editable digital repository (2), regarding the goods that each sender ships to the respective consignee, as well as, when available, at least the digital signatures shared by the data processing central unit (3).

8. System (1) according to any previous claim, wherein each shipping agent's device (5) is configured to generate one document, optionally a paper document or a digital document containing the data stored on said non-editable digital repository (2), regarding all the goods of all senders, shipped to said at least one consignee, as well as, when available, at least the digital signatures shared by the data processing central unit (3).

9. Method (100) for secure sharing of information regarding road transport or Roll-on/Roll-off transport, organized by a shipping agent, of goods sent by two or more senders to at least one consignee, through the same means of transport and through use of at least one first logistic operator and the at least one second logistic operator, with a system (1) according to claim 1, said method comprising:
A. transmitting to the data processing central unit (3), for each sender, said logistic information on the shipment of each sender, said identification code of the shipment of each sender, said identification code of the shipping agent's shipment, and the respective digital signature, as confirmation of the correctness of the transmitted information, said logistic information on the shipment of each sender, said identification code of the shipment of each sender, said identification code of the shipping agent's shipment and said digital signature being sent
by the sender's device (4) and said digital signature being univocally associated to the sender's identity, if the sender is a physical person, or to the identity of a physical person authorized by the sender to operate on the sender's device (4); or
by the shipping agent's device (5), when the shipping agent acts on behalf of the sender, and said digital signature being univocally associated to the identity of a physical person authorized by the shipping agent to operate on the shipping agent's device (5);
B. transmitting to the data processing central unit (3), through the shipping agent's device (5), data comprising the logistic information on the shipping agent's shipment and the identification code of the shipping agent's shipment and the digital signature of the shipping agent univocally associated to the identity of a physical person authorized by the shipping agent to operate on the shipping agent's device (5), as confirmation of the correctness of the transmitted information;
C. associating, by the data processing central unit (3), the logistic information on the shipment of each sender, with the logistic information on the shipping agent's shipment, based on the received identification codes of the shipment of each sender and the identification code of the shipping agent's shipment;
D. upon arrival of the first logistic operator at a respective sender, transmitting to the data processing central unit (3), through the device (6) of the first logistic operator or through the sender's device (4), possible information regarding the compliance of the goods that the first logistic operator is to transport to the departure logistic hub and the digital signature of the first logistic operator univocally associated to the identity of a physical person authorized by the first logistic operator to operate on the device (6) of the first logistic operator, as confirmation of the correctness of the transmitted information;
E. upon arrival of the second logistic operator at the departure logistic hub, transmitting to the data processing central unit (3), through the device (7) of the second logistic operator, possible information on the compliance of the goods to be transported to the destination logistic hub land the digital signature of the second logistic operator univocally associated to the identity of a physical person authorized by the second logistic operator to operate on the device (7) of the second logistic operator, as confirmation of the correctness of the transmitted information;
F. upon arrival of the goods at said destination logistic hub, transmitting to the data processing central unit (3), through the device (8) of the consignee, possible information on the compliance of the received goods, and the digital signature of the consignee univocally associated to the identity of a physical person authorized by the consignee to operate on the consignee's device (8), as confirmation of the correctness of the transmitted information;
wherein
upon receipt of each digital signature of each device, the data processing central unit (3) transmits and stores on the non-editable digital repository (2) each digital signature as well as the respective data and the respective received information and
upon receipt of the digital signature transmitted by the device (8) of the consignee, the data processing central unit (3) shares the digital signature of the consignee with the shipping agent's device (5) and, based on the identification code of the shipment of each sender and the identification code of the shipping agent's shipment also with each device (4) of each sender whose goods have been received by the consignee.

10. Method (100) according to claim 9, implemented through a system (1) according to claim 2, comprising:
H. upon arrival of the third logistic operator at the destination logistic hub, transmitting to the data processing central unit (3), through the device (9) of the third logistic operator, possible information on the compliance of the goods to be transported to the final destination and the digital signature of the third logistic operator univocally associated to the identity of a physical person authorized by the third logistic operator to operate on the device (9) of the third logistic operator, as confirmation of the correctness of the transmitted information;
I. upon arrival of the goods at said final destination, transmitting to the data processing central unit (3), through the device (10) of the final consignee, possible information on the compliance of the received goods, and the digital signature of the final consignee univocally associated to the identity of the final consignee, if the final consignee is a physical person, or univocally associated to the identity of a physical person authorized by the final consignee to operate on the device (10) of the final consignee, as confirmation of the correctness of the transmitted information;
wherein
upon receipt of each digital signature of the third logistic operator and the final consignee, the data processing central unit (3) transmits and stores on the non-editable digital repository (2) each digital signature as well as the respective data and the respective received information, and
upon receipt of the digital signature transmitted by the device (10) of the final consignee, the data processing central unit (3) shares the digital signature of the final consignee with the shipping agent's device (5) and, based on the identification code of the shipment of each sender and the identification code of the shipping agent's shipment also with each device (4) of each sender whose goods have been received by the final consignee.

11. Computer program, comprising instructions that cause the execution of the method according to claims 9 and 10, by the system according to any claim 1 to 8.

12. Computer readable data carrier, having stored thereon a computer program according to claim 11.

## Patentansprüche

1. System (1) zur sicheren Weitergabe von Informationen über den Straßentransport oder den Roll-on/Roll-off-Transport, das von einem Spediteur organisiert wird, von Gütern, die von einem oder mehreren Absendern an mindestens einen Empfänger versandt werden, unter Verwendung derselben Art von Transportmitteln und unter Einsatz von mindestens einem ersten Logistikunternehmen und mindestens einem zweiten Logistikunternehmen, wobei das System (1) umfasst:
- mindestens ein nicht editierbares digitales Repository (2);
- mindestens eine Datenverarbeitungszentrale (3), die operativ mit dem mindestens einen nicht editierbaren digitalen Speicher (2) verbunden ist;
- ein Sendergerät (4) für jeden Sender, wobei jedes Sendergerät (4) so konfiguriert ist, dass es mit der mindestens einen Datenverarbeitungszentraleinheit (3) operativ verbunden ist, um folgende Daten an diese zu übertragen:
✔ Daten, die logistische Informationen über die Sendung dieses Absenders enthalten;
✔ einen Identifikationscode der Sendung dieses Absenders;
✔ einen Identifikationscode der Sendung des Spediteurs; und
✔ eine digitale Signatur, die eindeutig mit der Identität des Absenders verknüpft ist, wenn der Absender eine natürliche Person ist, oder eindeutig mit der Identität einer natürlichen Person verknüpft ist, die vom Absender autorisiert ist, auf dem Gerät (4) des Absenders zu operieren;
- mindestens ein Gerät des Spediteurs (5), das so konfiguriert ist, dass es operativ mit der mindestens einen Datenverarbeitungszentraleinheit (3) verbunden ist, um an diese Folgendes zu übertragen:
✔ Daten, die mindestens einen Teil der logistischen Informationen über die Sendung des Versandagenten umfassen;
✔ den Identifikationscode der Sendung des Spediteurs;
✔ Informationen über einen zweiten Logistikdienstleister, der für die Abholung der Waren von einem Logistikzentrum am Abgangsort und deren Beförderung zu einem Logistikzentrum am Bestimmungsort verantwortlich ist; und
✔ eine digitale Signatur, die eindeutig der Identität einer natürlichen Person zugeordnet ist, die vom Spediteur autorisiert ist, auf dem Gerät (5) des Spediteurs zu arbeiten;
- ein Gerät (6) für den mindestens einen ersten Logistikdienstleister, der für die Abholung der Waren bei einem jeweiligen Absender und deren Transport zum Abgangslogistikzentrum verantwortlich ist, wobei jedes Gerät (6) des mindestens einen ersten Logistikdienstleisters so konfiguriert ist, dass es operativ mit der mindestens einen Datenverarbeitungszentraleinheit (3) verbunden ist und als Eingabe die Daten des jeweiligen durchzuführenden Transports empfängt und an diese Daten übermittelt, die Folgendes umfassen:
✔ Informationen über die Konformität der zu transportierenden Güter; und
✔ eine digitale Signatur, die eindeutig der Identität einer natürlichen Person zugeordnet ist, die vom ersten Logistikunternehmen autorisiert ist, auf dem Gerät (6) des ersten Logistikunternehmens zu arbeiten;
- ein Gerät (7) für das zweite Logistikunternehmen, das für die Abholung der Güter vom Logistikzentrum am Abfahrtsort und deren Transport zum Logistikzentrum am Bestimmungsort verantwortlich ist, wobei das Gerät (7) des zweiten Logistikunternehmens so konfiguriert ist, dass es operativ mit der mindestens einen Datenverarbeitungszentraleinheit (3) verbunden ist und die Daten des jeweiligen durchzuführenden Transports als Eingabe empfängt und Daten übermittelt, die Folgendes umfassen:
✔ Informationen über die Konformität der zu transportierenden Güter; und
✔ eine digitale Signatur, die eindeutig der Identität einer natürlichen Person zugeordnet ist, die vom zweiten Logistikunternehmen zum Betrieb des Geräts (7) des zweiten Logistikunternehmens autorisiert ist;
- ein Empfängergerät (8) für den mindestens einen Empfänger, das so konfiguriert ist, dass es funktionsfähig mit der mindestens einen Datenverarbeitungszentraleinheit (3) verbunden ist und die Daten der am Zielort-Logistikzentrum empfangenen Güter als Eingabe empfängt und Daten an diese überträgt, die Folgendes umfassen:
✔ Informationen über die Konformität der empfangenen Güter und
✔ eine digitale Signatur, die eindeutig mit der Identität einer natürlichen Person verknüpft ist, die vom Empfänger zum Betrieb des Empfängergeräts (8) autorisiert ist;
wobei die Datenverarbeitungszentraleinheit (3) so konfiguriert ist, dass sie:
- jede digitale Signatur und die von jedem Gerät (4) jedes Absenders, jedem Gerät (6) des ersten Logistikunternehmens, dem Gerät (5) des Spediteurs, dem Gerät (7) des zweiten Logistikunternehmens und jedem Gerät (8) des mindestens einen Empfängers übertragenen Daten zu empfangen und nach dem Empfang jeder digitalen Signatur auch diese digitale Signatur und die entsprechenden Daten in dem nicht editierbaren digitalen Speicher (2) zu speichern;
- die Logistikinformationen über die Sendung jedes Absenders mit den Logistikinformationen über die Sendung des Spediteurs auf der Grundlage der empfangenen Sendungsidentifikationscodes jedes Absenders und des Identifikationscodes der Sendung des Spediteurs zu verknüpfen;
- automatisches und selektives Teilen der vom Gerät (6) des ersten Logistikunternehmens und vom Gerät (7) des zweiten Logistikunternehmens empfangenen digitalen Signatur sowie der Konformitätsinformationen der von dort übertragenen Waren, die im nicht editierbaren digitalen Speicher (2) gespeichert sind, mit dem Gerät (5) des Spediteurs auf der Grundlage des Identifikationscodes der Sendung des Spediteurs;
- automatisches und selektives Teilen mit jedem Gerät (4) jedes Absenders, basierend auf dem Identifikationscode der Sendung jedes Absenders und dem Identifikationscode der Sendung des Spediteurs, die vom Gerät (6) des ersten Logistikunternehmens und vom Gerät (7) des zweiten Logistikunternehmens empfangene digitale Signatur sowie die Informationen über die Konformität der von den Absendern versandten Waren, die von dort übertragen und im nicht editierbaren digitalen Speicher (2) gespeichert wurden; sowie
- nach Erhalt jeder digitalen Signatur, die von einem Gerät (8) des mindestens einen Empfängers empfangen wurde, diese digitale Signatur automatisch an das Gerät (5) des Spediteurs und auf der Grundlage des Identifikationscodes der Sendung jedes Absenders und des Identifikationscodes der Sendung des Spediteurs auch an jedes Gerät (4) jedes Absenders weiterleiten, dessen Waren von dem mindestens einen Empfänger empfangen wurden.

2. System (1) gemäß Anspruch 1, umfassend:
- ein Gerät (9) für mindestens einen dritten Logistikunternehmens, der für die Übernahme der Waren vom Ziel-Logistikzentrum und deren Transport zum endgültigen Empfänger verantwortlich ist, wobei das Gerät (9) des dritten Logistikunternehmens so konfiguriert ist, dass es operativ mit der mindestens einen Datenverarbeitungszentraleinheit (3) verbunden ist und die Daten des jeweiligen durchzuführenden Transports als Eingabe empfängt und Daten an diese überträgt, die Folgendes umfassen:
✔ Informationen über die Konformität der zu transportierenden Güter; und
✔ eine digitale Signatur, die eindeutig der Identität einer natürlichen Person zugeordnet ist, die vom dritten Logistikunternehmen autorisiert ist, das Gerät (9) des dritten Logistikunternehmens zu bedienen;
- ein Empfängergerät (10) für den mindestens einen Endempfänger, das so konfiguriert ist, dass es funktionsfähig mit der mindestens einen Datenverarbeitungszentraleinheit (3) verbunden ist und die Daten der am Endziel empfangenen Güter als Eingabe empfängt und Daten übermittelt, die Folgendes umfassen:
✔ Informationen über die Konformität der empfangenen Waren und
✔ eine digitale Signatur, die eindeutig mit der Identität des Endempfängers verknüpft ist, wenn der Endempfänger eine natürliche Person ist, oder eindeutig mit der Identität einer natürlichen Person verknüpft ist, die vom Endempfänger autorisiert ist, das Gerät (10) des Endempfängers zu bedienen;
wobei die Datenverarbeitungszentraleinheit (3) so konfiguriert ist, dass sie:
- auch jede digitale Signatur von dem Gerät (9) des dritten Logistikunternehmens und von jedem Gerät (10) des Endempfängers als Eingabe zu empfangen und nach dem Empfang jeder digitalen Signatur auch diese digitale Signatur und die entsprechenden empfangenen Daten in dem nicht editierbaren digitalen Speicher (2) zu speichern;
- automatisch und selektiv mit dem Gerät (5) des Spediteurs auf der Grundlage des Identifikationscodes der Sendung des Spediteurs die vom Gerät (9) des dritten Logistikunternehmens empfangene digitale Signatur und die Informationen über die Konformität der von dort übertragenen Waren, die in dem nicht editierbaren digitalen Speicher (2) gespeichert sind, auszutauschen;
- automatisch und selektiv mit jedem Gerät (4) jedes Absenders auf der Grundlage des Identifikationscodes der Sendung jedes Absenders und des Identifikationscodes der Sendung des Spediteurs die vom Gerät (9) des dritten Logistikunternehmens empfangene digitale Signatur und die Informationen über die Konformität der von den Absendern versandten Waren, die vom Gerät des dritten Logistikunternehmens übertragen und im nicht editierbaren digitalen Speicher (2) gespeichert wurden, weitergeben; sowie
- nach Erhalt jeder digitalen Signatur, die vom Gerät (10) des Endempfängers empfangen wurde, diese digitale Signatur automatisch mit dem Gerät (5) des Spediteurs und, basierend auf dem Identifikationscode der Sendung jedes Absenders und dem Identifikationscode der Sendung des Spediteurs, auch mit jedem Gerät (4) jedes Absenders, dessen Waren vom Endempfänger empfangen wurden, zu teilen.

3. System (1) gemäß Anspruch 1 oder 2, wobei das Gerät (5) des Spediteurs so konfiguriert ist, dass es an die Datenverarbeitungszentrale (3) auch Folgendes übermittelt:
- Daten, die die logistischen Informationen über die Sendung jedes Absenders umfassen;
- einen Identifikationscode der Sendung jedes Absenders; und
- eine digitale Signatur im Namen jedes Absenders, wobei diese digitale Signatur eindeutig mit der Identität einer natürlichen Person verknüpft ist, die vom Versandagenten autorisiert ist, auf dem Gerät (5) des Versandagenten zu arbeiten.

4. System (1) gemäß einem der vorhergehenden Ansprüche, wobei das nicht editierbare digitale Repository (2) eine Blockchain oder eine Technologie der DLT-Familie (Distributed Ledger Technologies) umfasst.

5. System (1) gemäß einem der vorhergehenden Ansprüche, wobei die digitale Signatur eine fortgeschrittene digitale Signatur ist, die durch eine Zwei-Faktor-Authentifizierung und Geolokalisierung erhalten wird und immer das Datum, die Uhrzeit und den Ort enthält, an dem die digitale Signatur erstellt wurde.

6. System (1) gemäß einem der vorhergehenden Ansprüche, wobei jedes Gerät (4) jedes Absenders so konfiguriert ist, dass es ein Dokument, wahlweise ein Papierdokument oder ein digitales Dokument, einschließlich der in dem nicht editierbaren digitalen Speicher (2) gespeicherten Daten, über die an den jeweiligen Empfänger versandten Waren der Absender sowie, sofern verfügbar, mindestens die von der Datenverarbeitungszentrale (3) freigegebenen digitalen Signaturen erzeugt.

7. System (1) gemäß einem der Ansprüche 1 bis 5, wobei jedes Gerät (5) eines Spediteurs so konfiguriert ist, dass es im Namen jedes Absenders ein Dokument, wahlweise ein Papierdokument oder ein digitales Dokument, erzeugt, das die auf dem nicht editierbaren digitalen Speicher (2) gespeicherten Daten zu den Waren enthält, die jeder Absender an den jeweiligen Empfänger versendet, sowie, sofern verfügbar, mindestens die von der Datenverarbeitungszentrale (3) geteilt werden.

8. System (1) gemäß einem der vorhergehenden Ansprüche, wobei jede Versandagentenvorrichtung (5) so konfiguriert ist, dass sie ein Dokument, wahlweise ein Papierdokument oder ein digitales Dokument, das die auf dem nicht editierbaren digitalen Speicher (2) gespeicherten Daten enthält, in Bezug auf alle Waren aller Absender, die an den mindestens einen Empfänger versandt werden, sowie, falls verfügbar, mindestens die von der Datenverarbeitungszentrale (3) geteilten digitalen Signaturen erzeugt.

9. Verfahren (100) zum sicheren Austausch von Informationen über den Straßenverkehr oder den Roll-on/Roll-off-Transport, organisiert durch einen Spediteur, von Gütern, die von zwei oder mehr Absendern an mindestens einen Empfänger versandt werden, unter Verwendung desselben Transportmittels und unter Einsatz mindestens eines ersten Logistikunternehmens und mindestens eines zweiten Logistikunternehmens, mit einem System (1) gemäß Anspruch 1, wobei das Verfahren umfasst:
A. Übertragen der Logistikinformationen über die Sendung jedes Absenders, des Identifikationscodes der Sendung jedes Absenders, des Identifikationscodes der Sendung des Spediteurs und der jeweiligen digitalen Signatur als Bestätigung der Richtigkeit der übertragenen Informationen an die Datenverarbeitungszentrale (3), wobei die Logistikinformationen über die Sendung jedes Absenders, der Identifikationscode der Sendung jedes Absenders wobei der Identifikationscode der Sendung des Versandagenten und die digitale Signatur vom Gerät (4) des Absenders gesendet werden und die digitale Signatur eindeutig mit der Identität des Absenders, wenn dieser eine natürliche Person ist, oder mit der Identität einer vom Absender zur Bedienung des Geräts (4) des Absenders autorisierten natürlichen Person verknüpft ist; oder
vom Gerät (5) des Versandagenten, wenn der Versandagent im Namen des Absenders handelt, und wobei die digitale Signatur eindeutig der Identität einer natürlichen Person zugeordnet ist, die vom Versandagenten zur Bedienung des Geräts (5) des Versandagenten autorisiert ist;
B. Übertragen von Daten, die die logistischen Informationen über die Sendung des Versandagenten und den Identifikationscode der Sendung des Versandagenten sowie die digitale Signatur des Versandagenten, die eindeutig mit der Identität einer natürlichen Person verknüpft ist, die vom Versandagenten zur Bedienung des Geräts (5) des Versandagenten autorisiert ist, an die Datenverarbeitungszentrale (3) über das Gerät (5) des Versandagenten als Bestätigung der Richtigkeit der übertragenen Informationen;
C. Zuordnen der Logistikinformationen zur Sendung jedes Absenders durch die Datenverarbeitungszentrale (3) zu den Logistikinformationen zur Sendung des Spediteurs auf der Grundlage der empfangenen Identifikationscodes der Sendung jedes Absenders und des Identifikationscodes der Sendung des Spediteurs;
D. bei Ankunft des ersten Logistikunternehmens beim jeweiligen Absender, Übertragung an die Datenverarbeitungszentrale (3) über das Gerät (6) des ersten Logistikunternehmens oder über das Gerät (4) des Absenders, mögliche Informationen über die Konformität der Waren, die der erste Logistikdienstleister zum Abfahrtslogistikzentrum transportieren soll, und die digitale Signatur des ersten Logistikunternehmens, die eindeutig mit der Identität einer natürlichen Person verbunden ist, die vom ersten Logistikunternehmen zum Betrieb des Geräts (6) des ersten Logistikunternehmens autorisiert ist, als Bestätigung der Richtigkeit der übermittelten Informationen;
E. bei Ankunft des zweiten Logistikunternehmens am Abgangslogistikzentrum Übermittlung an die Datenverarbeitungszentrale (3) über das Gerät (7) des zweiten Logistikunternehmens mögliche Informationen über die Konformität der zu transportierenden Güter mit dem Ziel-Logistikzentrum und die digitale Signatur des zweiten Logistikunternehmens, die eindeutig mit der Identität einer natürlichen Person verbunden ist, die vom zweiten Logistikunternehmen zum Betrieb des Geräts (7) des zweiten Logistikunternehmens autorisiert ist, als Bestätigung der Richtigkeit der übermittelten Informationen;
F.bei Ankunft der Güter am genannten Ziel-Logistikzentrum, Übertragung an die zentrale Datenverarbeitungseinheit (3), über das Gerät (8) des Empfängers mögliche Informationen über die Konformität der empfangenen Güter und die digitale Signatur des Empfängers, die eindeutig mit der Identität einer natürlichen Person verbunden ist, die vom Empfänger zum Betrieb des Geräts (8) des Empfängers autorisiert ist, als Bestätigung der Richtigkeit der übermittelten Informationen;
wobei
bei Empfang jeder digitalen Signatur jedes Geräts die Datenverarbeitungszentrale (3) jede digitale Signatur sowie die entsprechenden Daten und die entsprechenden empfangenen Informationen an das nicht editierbare digitale Repository (2) überträgt und dort speichert und
bei Empfang der vom Gerät (8) des Empfängers übertragenen digitalen Signatur die Datenverarbeitungszentrale (3) die digitale Signatur des Empfängers an das Gerät (5) des Spediteurs und, basierend auf dem Identifikationscode der Sendung jedes Absenders und dem Identifikationscode der Sendung des Spediteurs, auch an jedes Gerät (4) jedes Absenders, dessen Waren vom Empfänger empfangen wurden, weitergibt.

10. Verfahren (100) nach Anspruch 9, das durch ein System (1) nach Anspruch 2 implementiert wird, umfassend:
H. bei Ankunft des dritten Logistikunternehmens am Ziel-Logistikzentrum Übertragung an die Datenverarbeitungszentrale (3) über das Gerät (9) des dritten Logistikunternehmens mögliche Informationen über die Konformität der zu transportierenden Güter mit dem endgültigen Bestimmungsort und die digitale Signatur des dritten Logistikunternehmens, die eindeutig mit der Identität einer natürlichen Person verbunden ist, die vom dritten Logistikunternehmen autorisiert ist, auf dem Gerät (9) des dritten Logistikunternehmens zu arbeiten, als Bestätigung der Richtigkeit der übertragenen Informationen;
I. bei Ankunft der Güter am genannten Endbestimmungsort, über das Gerät (10) des Endempfängers, mögliche Informationen über die Konformität der empfangenen Güter an die Datenverarbeitungszentrale (3) zu übermitteln, und die digitale Signatur des Endempfängers, die eindeutig mit der Identität des Endempfängers verknüpft ist, wenn der Endempfänger eine natürliche Person ist, oder eindeutig mit der Identität einer natürlichen Person verknüpft ist, die vom Endempfänger zum Betrieb des Geräts (10) des Endempfängers autorisiert wurde, als Bestätigung der Richtigkeit der übermittelten Informationen;
wobei
bei Empfang jeder digitalen Signatur des dritten Logistikunternehmens und des Endempfängers die Datenverarbeitungszentrale (3) jede digitale Signatur sowie die entsprechenden Daten und die entsprechenden empfangenen Informationen überträgt und im nicht editierbaren digitalen Speicher (2) speichert, und
bei Empfang der vom Gerät (10) des Endempfängers übertragenen digitalen Signatur die Datenverarbeitungszentrale (3) die digitale Signatur des Endempfängers an das Gerät (5) des Spediteurs und, basierend auf dem Identifikationscode der Sendung jedes Absenders und dem Identifikationscode der Sendung des Spediteurs, auch an jedes Gerät (4) jedes Absenders, dessen Waren vom Endempfänger empfangen wurden, weitergibt.

11. Computerprogramm, das Anweisungen umfasst, die die Ausführung des Verfahrens gemäß den Ansprüchen 9 und 10 durch das System gemäß einem der Ansprüche 1 bis 8 bewirken.

12. Computerlesbarer Datenträger, auf dem ein Computerprogramm gemäß Anspruch 11 gespeichert ist.

## Revendications

1. Système (1) pour le partage sécurisé d'informations concernant le transport routier ou le transport roulier, organisé par un commissionnaire expéditeur, de marchandises envoyées par un ou plusieurs expéditeurs à au moins un destinataire, par le même type de moyen de transport et par l'utilisation d'au moins un premier opérateur logistique et d'au moins un deuxième opérateur logistique, ledit système (1) comprenant:
- au moins un référentiel numérique non modifiable (2);
- au moins une unité centrale de traitement de données (3), reliée de manière fonctionnelle audit au moins un référentiel numérique non modifiable (2);
- un dispositif (4) de l'expéditeur pour chaque expéditeur, chaque dispositif (4) de l'expéditeur étant configuré pour être relié de manière fonctionnelle à ladite au moins une unité centrale de traitement de données (3), afin de lui transmettre:
✔ des données comprenant des informations logistiques sur l'expédition de cet expéditeur;
✔ un code d'identification de l'expédition de cet expéditeur;
✔ un code d'identification de l'expédition du commissionnaire expéditeur; et
✔ une signature numérique associée de manière univoque à l'identité de l'expéditeur, si l'expéditeur est une personne physique, ou associée de manière univoque à l'identité d'une personne physique autorisée par l'expéditeur à opérer sur le dispositif (4) de l'expéditeur;
- au moins un dispositif (5) du commissionnaire expéditeur, configuré pour être relié de manière fonctionnelle à ladite au moins une unité centrale de traitement de données (3), afin de lui transmettre:
✔ des données comprenant au moins une partie des informations logistiques sur l'expédition du commissionnaire expéditeur;
✔ ledit code d'identification de l'expédition du commissionnaire expéditeur;
✔ des informations concernant un deuxième opérateur logistique, responsable de collecter les marchandises à partir d'un pôle logistique de départ et de les acheminer vers un pôle logistique de destination; et
✔ une signature numérique associée de manière univoque à l'identité d'une personne physique autorisée par le commissionnaire expéditeur à opérer sur le dispositif (5) du commissionnaire expéditeur;
- un dispositif (6) pour ledit au moins un premier opérateur logistique responsable de collecter les marchandises d'un expéditeur respectif et de les transporter vers le pôle logistique de départ, chaque dispositif (6) dudit au moins un premier opérateur logistique étant configuré pour être relié de manière fonctionnelle à ladite au moins une unité centrale de traitement de données (3) et recevoir en entrée les données du transport respectif à effectuer et lui transmettre des données comprenant:
✔ des informations concernant la conformité des marchandises à transporter; et
✔ une signature numérique associée de manière univoque à l'identité d'une personne physique autorisée par le premier opérateur logistique à opérer sur le dispositif (6) du premier opérateur logistique;
- un dispositif (7) pour ledit deuxième opérateur logistique responsable de prendre les marchandises du pôle logistique de départ et de les transporter vers le pôle logistique de destination, ledit dispositif (7) dudit deuxième opérateur logistique étant configuré pour être relié de manière fonctionnelle à ladite au moins une unité centrale de traitement de données (3) et recevoir en entrée les données du transport respectif à effectuer et lui transmettre des données comprenant:
✔ des informations concernant la conformité des marchandises à transporter; et
✔ une signature numérique associée de manière univoque à l'identité d'une personne physique autorisée par le deuxième opérateur logistique à opérer sur le dispositif (7) du deuxième opérateur logistique;
- un dispositif (8) du destinataire pour ledit au moins un destinataire, configuré pour être relié de manière fonctionnelle à ladite au moins une unité centrale de traitement de données (3) et recevoir en entrée les données des marchandises reçues audit pôle logistique de destination et lui transmettre des données comprenant:
✔ des informations concernant la conformité des marchandises reçues, et
✔ une signature numérique associée de manière univoque à l'identité d'une personne physique autorisée par le destinataire à opérer sur le dispositif (8) du destinataire;
dans lequel ladite unité centrale de traitement de données (3) est configurée pour:
- recevoir en entrée chaque signature numérique et les données transmises par chaque dispositif (4) de chaque expéditeur, chaque dispositif (6) du premier opérateur logistique, ledit dispositif (5) du commissionnaire expéditeur, ledit dispositif (7) dudit deuxième opérateur logistique et chaque dispositif (8) dudit au moins un destinataire et, lors de la réception de chaque signature numérique, stocker également ladite signature numérique et les données correspondantes sur ledit référentiel numérique non modifiable (2);
- associer les informations logistiques sur l'expédition de chaque expéditeur aux informations logistiques sur l'expédition du commissionnaire expéditeur, sur la base desdits codes d'identification d'expédition reçus de chaque expéditeur et dudit code d'identification de l'expédition du commissionnaire expéditeur;
- partager automatiquement et de manière sélective, avec ledit dispositif (5) du commissionnaire expéditeur, sur la base du code d'identification de l'expédition du commissionnaire expéditeur, la signature numérique reçue du dispositif (6) du premier opérateur logistique et du dispositif (7) du deuxième opérateur logistique, ainsi que les informations de conformité des marchandises transmises à partir de ceux-ci, stockées sur ledit référentiel numérique non modifiable (2);
- partager automatiquement et de manière sélective, avec chaque dispositif (4) de chaque expéditeur, sur la base du code d'identification de l'expédition de chaque expéditeur et du code d'identification de l'expédition du commissionnaire expéditeur, la signature numérique reçue du dispositif (6) du premier opérateur logistique et du dispositif (7) du deuxième opérateur logistique, ainsi que les informations sur la conformité des marchandises expédiées par les expéditeurs, transmises à partir de ceux-ci, stockées sur le référentiel numérique non modifiable (2); ainsi que
- lors de la réception de chaque signature numérique reçue d'un dispositif (8) dudit au moins un destinataire, partager automatiquement ladite signature numérique avec le dispositif (5) du commissionnaire expéditeur et, sur la base du code d'identification de l'expédition de chaque expéditeur et du code d'identification de l'expédition du commissionnaire expéditeur également avec chaque dispositif (4) de chaque expéditeur dont les marchandises ont été reçues par ledit au moins un destinataire.

2. Système (1) selon la revendication 1, comprenant:
- un dispositif (9) pour au moins un troisième opérateur logistique responsable de prendre en charge les marchandises du pôle logistique de destination et de les transporter vers un destinataire final, ledit dispositif (9) dudit troisième opérateur logistique étant configuré pour être relié de manière fonctionnelle à ladite au moins une unité centrale de traitement de données (3) et recevoir en entrée les données du transport respectif à effectuer et lui transmettre des données comprenant:
✔ des informations concernant la conformité des marchandises à transporter; et
✔ une signature numérique associée de manière univoque à l'identité d'une personne physique autorisée par le troisième opérateur logistique à opérer sur le dispositif (9) du troisième opérateur logistique;
- un dispositif (10) du destinataire pour ledit au moins un destinataire final, configuré pour être relié de manière fonctionnelle à ladite au moins une unité centrale de traitement de données (3) et recevoir en entrée les données des marchandises, reçues à une destination finale, et lui transmettre des données comprenant:
✔ des informations concernant la conformité des marchandises reçues, et
✔ une signature numérique associée de manière univoque à l'identité du destinataire final, si le destinataire final est une personne physique, ou associée de manière univoque à l'identité d'une personne physique autorisée par le destinataire final à opérer sur le dispositif (10) du destinataire final;
dans lequel ladite unité centrale de traitement de données (3) est configurée pour:
- recevoir en entrée également chaque signature numérique dudit dispositif (9) dudit troisième opérateur logistique et de chaque dispositif (10) dudit destinataire final et, lors de la réception de chaque signature numérique, stocker également ladite signature numérique et les données correspondantes reçues sur ledit référentiel numérique non modifiable (2);
- partager automatiquement et de manière sélective, avec ledit dispositif (5) du commissionnaire expéditeur, sur la base du code d'identification de l'expédition du commissionnaire expéditeur, la signature numérique reçue du dispositif (9) du troisième opérateur logistique et les informations sur la conformité des marchandises transmises à partir de celui-ci, stockées dans ledit référentiel numérique non modifiable (2);
- partager automatiquement et de manière sélective, avec chaque dispositif (4) de chaque expéditeur, sur la base du code d'identification de l'expédition de chaque expéditeur et du code d'identification de l'expédition du commissionnaire expéditeur, la signature numérique reçue du dispositif (9) du troisième opérateur logistique et les informations sur la conformité des marchandises expédiées par les expéditeurs, transmises par le dispositif du troisième opérateur logistique, stockées sur le référentiel numérique non modifiable (2); ainsi que
- lors de la réception de chaque signature numérique reçue par le dispositif (10) du destinataire final, partager automatiquement ladite signature numérique avec ledit dispositif (5) du commissionnaire expéditeur et, sur la base du code d'identification de l'expédition de chaque expéditeur et du code d'identification de l'expédition du commissionnaire expéditeur, également avec chaque dispositif (4) de chaque expéditeur dont les marchandises ont été reçues par le destinataire final.

3. Système (1) selon la revendication 1 ou 2, dans lequel ledit dispositif (5) du commissionnaire expéditeur est configuré pour transmettre à ladite unité centrale de traitement de données (3), également:
✔ des données comprenant des informations logistiques sur l'expédition de chaque expéditeur;
✔ un code d'identification de l'expédition de chaque expéditeur; et
✔ une signature numérique au nom de chaque expéditeur, ladite signature numérique étant associée de manière univoque à l'identité d'une personne physique autorisée par le commissionnaire expéditeur à opérer sur le dispositif (5) du commissionnaire expéditeur.

4. Système (1) selon l'une des revendications précédentes, dans lequel ledit référentiel numérique non modifiable (2) comprend une chaîne de blocs ou une technologie de la famille DLT (Distributed Ledger Technologies).

5. Système (1) selon l'une des revendications précédentes, dans lequel ladite signature numérique est une signature numérique avancée, obtenue par une authentification à deux facteurs et une géolocalisation, et elle comprend toujours la date, l'heure et le lieu où la signature numérique a été apposée.

6. Système (1) selon l'une des revendications précédentes, dans lequel chaque dispositif (4) de chaque expéditeur est configuré pour générer un document, éventuellement un document papier ou un document numérique, comprenant les données stockées sur ledit référentiel numérique non modifiable (2), concernant les marchandises des expéditeurs expédiées au destinataire respectif, ainsi que, lorsqu'elles sont disponibles, au moins les signatures numériques partagées par l'unité centrale de traitement de données (3).

7. Système (1) selon l'une des revendications 1 à 5, dans lequel chaque dispositif (5) du commissionnaire expéditeur est configuré pour générer, au nom de chaque expéditeur, un document, éventuellement un document papier ou un document numérique, comprenant les données stockées sur ledit référentiel numérique non modifiable (2), concernant les marchandises que chaque expéditeur expédie au destinataire respectif, ainsi que, lorsqu'elles sont disponibles, au moins les signatures numériques partagées par l'unité centrale de traitement de données (3).

8. Système (1) selon l'une des revendications précédentes, dans lequel chaque dispositif (5) du commissionnaire expéditeur est configuré pour générer un document, éventuellement un document papier ou un document numérique contenant les données stockées sur ledit référentiel numérique non modifiable (2), concernant toutes les marchandises de tous les expéditeurs, expédiées audit au moins un destinataire, ainsi que, lorsqu'elles sont disponibles, au moins les signatures numériques partagées par l'unité centrale de traitement de données (3).

9. Procédé (100) pour le partage sécurisé d'informations concernant le transport routier ou le transport roulier, organisé par un commissionnaire expéditeur, de marchandises envoyées par deux expéditeurs ou plus à au moins un destinataire, par le même moyen de transport et par l'utilisation d'au moins un premier opérateur logistique et de l'au moins un deuxième opérateur logistique, avec un système (1) selon la revendication 1, ledit procédé comprenant:
A. la transmission à l'unité centrale de traitement de données (3), pour chaque expéditeur, desdites informations logistiques sur l'expédition de chaque expéditeur, dudit code d'identification de l'expédition de chaque expéditeur, dudit code d'identification de l'expédition du commissionnaire expéditeur et de la signature numérique respective, comme confirmation de l'exactitude des informations transmises, lesdites informations logistiques sur l'expédition de chaque expéditeur, ledit code d'identification de l'expédition de chaque expéditeur, ledit code d'identification de l'expédition du commissionnaire expéditeur et ladite signature numérique étant envoyés
par le dispositif (4) de l'expéditeur et ladite signature numérique étant associée de manière univoque à l'identité de l'expéditeur, si l'expéditeur est une personne physique, ou à l'identité d'une personne physique autorisée par l'expéditeur à opérer sur le dispositif (4) de l'expéditeur; ou
par le dispositif (5) du commissionnaire expéditeur, lorsque le commissionnaire expéditeur agit au nom de l'expéditeur, et ladite signature numérique étant associée de manière univoque à l'identité d'une personne physique autorisée par le commissionnaire expéditeur à opérer sur le dispositif (5) du commissionnaire expéditeur;
B. la transmission à l'unité centrale de traitement de données (3), par l'intermédiaire du dispositif (5) du commissionnaire expéditeur, de données comprenant les informations logistiques sur l'expédition du commissionnaire expéditeur et le code d'identification de l'expédition du commissionnaire expéditeur et la signature numérique du commissionnaire expéditeur associée de manière univoque à l'identité d'une personne physique autorisée par le commissionnaire expéditeur à opérer sur le dispositif (5) du commissionnaire expéditeur, comme confirmation de l'exactitude des informations transmises;
C. l'association, par l'unité centrale de traitement de données (3), des informations logistiques sur l'expédition de chaque expéditeur aux informations logistiques sur l'expédition du commissionnaire expéditeur, sur la base des codes d'identification reçus de l'expédition de chaque expéditeur et du code d'identification de l'expédition du commissionnaire expéditeur;
D. à l'arrivée du premier opérateur logistique chez un expéditeur respectif, la transmission à l'unité centrale de traitement de données (3), par l'intermédiaire du dispositif (6) du premier opérateur logistique ou du dispositif (4) de l'expéditeur, d'informations éventuelles concernant la conformité des marchandises que le premier opérateur logistique doit transporter vers le pôle logistique de départ et de la signature numérique du premier opérateur logistique associée de manière univoque à l'identité d'une personne physique autorisée par le premier opérateur logistique à opérer sur le dispositif (6) du premier opérateur logistique, comme confirmation de l'exactitude des informations transmises;
E. à l'arrivée du deuxième opérateur logistique au pôle logistique de départ, la transmission à l'unité centrale de traitement de données (3), par l'intermédiaire du dispositif (7) du deuxième opérateur logistique, d'informations éventuelles sur la conformité des marchandises à transporter vers le pôle logistique de destination et de la signature numérique du deuxième opérateur logistique associée de manière univoque à l'identité d'une personne physique autorisée par le deuxième opérateur logistique à opérer sur le dispositif (7) du deuxième opérateur logistique, comme confirmation de l'exactitude des informations transmises;
F. à l'arrivée des marchandises audit pôle logistique de destination, la transmission à l'unité centrale de traitement de données (3), par l'intermédiaire du dispositif (8) du destinataire, d'informations éventuelles sur la conformité des marchandises reçues, et de la signature numérique du destinataire associée de manière univoque à l'identité d'une personne physique autorisée par le destinataire à opérer sur le dispositif (8) du destinataire, comme confirmation de l'exactitude des informations transmises;
dans lequel
lors de la réception de chaque signature numérique de chaque dispositif, l'unité centrale de traitement de données (3) transmet et stocke sur le référentiel numérique non modifiable (2) chaque signature numérique ainsi que les données respectives et les informations reçues respectives, et
lors de la réception de la signature numérique transmise par le dispositif (8) du destinataire, l'unité centrale de traitement de données (3) partage la signature numérique du destinataire avec le dispositif (5) du commissionnaire expéditeur et, sur la base du code d'identification de l'expédition de chaque expéditeur et du code d'identification de l'expédition du commissionnaire expéditeur, également avec chaque dispositif (4) de chaque expéditeur dont les marchandises ont été reçues par le destinataire.

10. Procédé (100) selon la revendication 9, mis en œuvre par un système (1) selon la revendication 2, comprenant:
H. à l'arrivée du troisième opérateur logistique au pôle logistique de destination, la transmission à l'unité centrale de traitement de données (3), par l'intermédiaire du dispositif (9) du troisième opérateur logistique, d'informations éventuelles sur la conformité des marchandises à transporter vers la destination finale et de la signature numérique du troisième opérateur logistique associée de manière univoque à l'identité d'une personne physique autorisée par le troisième opérateur logistique à opérer sur le dispositif (9) du troisième opérateur logistique, comme confirmation de l'exactitude des informations transmises;
I. à l'arrivée des marchandises à ladite destination finale, la transmission à l'unité centrale de traitement de données (3), par l'intermédiaire du dispositif (10) du destinataire final, d'informations éventuelles sur la conformité des marchandises reçues, et de la signature numérique du destinataire final associée de manière univoque à l'identité du destinataire final, si le destinataire final est une personne physique, ou associée de manière univoque à l'identité d'une personne physique autorisée par le destinataire final à opérer sur le dispositif (10) du destinataire final, comme confirmation de l'exactitude des informations transmises;
dans lequel
lors de la réception de chaque signature numérique du troisième opérateur logistique et du destinataire final, l'unité centrale de traitement de données (3) transmet et stocke sur le référentiel numérique non modifiable (2) chaque signature numérique ainsi que les données respectives et les informations reçues respectives, et
lors de la réception de la signature numérique transmise par le dispositif (10) du destinataire final, l'unité centrale de traitement de données (3) partage la signature numérique du destinataire final avec le dispositif (5) du commissionnaire expéditeur et, sur la base du code d'identification de l'expédition de chaque expéditeur et du code d'identification de l'expédition du commissionnaire expéditeur, également avec chaque dispositif (4) de chaque expéditeur dont les marchandises ont été reçues par le destinataire final.

11. Programme informatique, comprenant des instructions qui provoquent l'exécution du procédé selon les revendications 9 et 10, par le système selon l'une des revendications 1 à 8.

12. Support de données lisible par ordinateur, sur lequel est stocké un programme informatique selon la revendication 11.
